# DEMANDE DE BREVET EUROPEEN

(11) **EP 0 612 649 A1**
(43) Date de publication de la demande: **31.08.1994**
(21) Numéro de dépôt: 94400391.2
(22) Date de dépôt: 23.02.1994
(51) Int. Cl.: B62D 1/18

(54) **Arbre de direction télescopique notamment pour véhicule automobile**

(30) Priorité: 24.02.1993 FR 9302121
(71) Demandeur: ECIA - EQUIPEMENTS ET COMPOSANTS POUR L'INDUSTRIE AUTOMOBILE, F-25400 Audincourt (FR)
(72) Inventeur: Pourchot, Michel, F-25400 Audincourt (FR)
(74) Mandataire: Habasque, Etienne Joel Jean-François

(57) **Abrégé**

Cet arbre de direction télescopique notamment pour véhicule automobile, du type comportant deux portions d'arbre (2,3) tubulaires et cylindriques et déplaçables à coulissement l'une dans l'autre, dont l'une (3) comporte des cannelures axiales externes (4) adaptées pour coopérer avec des cannelures internes complémentaires (5) de l'autre portion d'arbre et des moyens d'absorption d'énergie de choc par contrôle du déplacement axial des portions d'arbre l'une par rapport à l'autre, est caractérisé en ce que les moyens d'absorption d'énergie sont formés par au moins une zone (6,7) de section déformée d'au moins l'une des portions d'arbre (2,3), provoquant une ovalisation localisée de celle-ci, permettant un montage sous contrainte de l'une des portions d'arbre dans l'autre.

## Description

La présente invention concerne ur arbre de direction télescopique notamment pour véhicule automobile.

On connaît déjà dans l'état de la technique, un certain nombre d'arbres de direction télescopiques qui comportent deux portions d'arbre tubulaires et cylindriques et déplaçables à coulissement l'une dans l'autre, dont l'une comporte des cannelures axiales externes adaptées pour coopérer avec des cannelures internes complémentaires de l'autre portion d'arbre.

Ces arbres de direction télescopiques sont par exemple utilisés dans des ensembles de colonne de direction à absorption d'énergie de choc et des moyens d'absorption d'énergie de choc par contrôle du déplacement axial des portions d'arbre l'une par rapport à l'autre, sont interposés entre les deux portions d'arbre.

Différents modes de réalisation de ces moyens d'absorption d'énergie de choc sont connus dans l'état de la technique.

C'est ainsi par exemple que ces moyens peuvent être constitués par des organes frangibles sous un effort déterminé, interposés entre ces deux portions d'arbre.

Par ailleurs, on connaît également des moyens d'absorption d'énergie qui se présentent sous la forme de bagues ou de manchons en matière plastique, reliés à la portion d'arbre interne et montés sous contrainte dans la portion d'arbre externe pour freiner le déplacement des portions d'arbre l'une par rapport à l'autre et absorber une certaine énergie.

Ces différentes solutions présentent un certain nombre d'inconvénients au niveau de l'automatisation de la fabrication des arbres correspondants et de la qualité des pièces obtenues.

En effet, la solution la plus répandue actuellement est celle utilisant des manchons en matière plastique, mais la fabrication de ceux-ci se traduit par des déchets importants dans la mesure où il est extrêmement difficile de contrôler avec précision le degré de mise sous contrainte de ces manchons dans la portion d'arbre externe et donc la capacité d'absorption d'énergie de l'arbre.

Le but de l'invention est donc de résoudre ces problèmes en proposant un arbre de direction télescopique qui soit simple et fiable et dans lequel les moyens d'absorption d'énergie de choc puissent être calibrés avec précision.

A cet effet, l'invention a pour objet un arbre de direction télescopique notamment pour véhicule automobile, du type comportant deux portions d'arbre tubulaires et cylindriques et déplaçables à coulissement l'une dans l'autre, dont l'une comporte des cannelures axiales externes adaptées pour coopérer avec des cannelures internes complémentaires de l'autre portion d'arbre et des moyens d'absorption d'énergie de choc par contrôle du déplacement axial des portions d'arbre l'une par rapport à l'autre, caractérisé en ce que les moyens d'absorption d'énergie sont formés par au moins une zone de section déformée d'au moins l'une des portions d'arbre, provoquant une ovalisation localisée de celle-ci, permettant un montage sous contrainte de l'une des portions d'arbre dans l'autre.

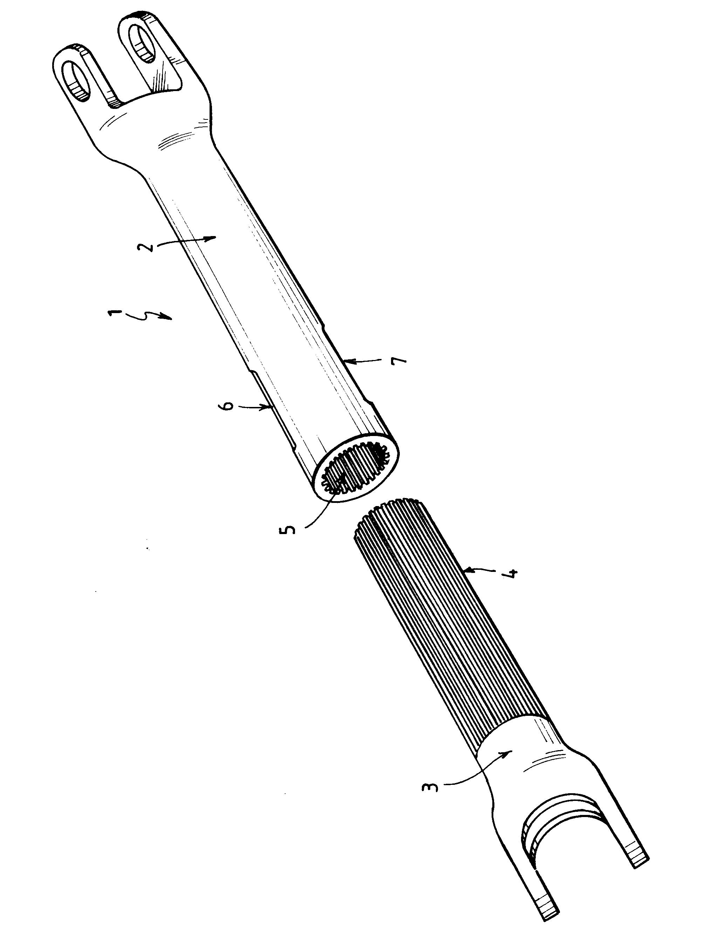

L'invention sera mieux comprise à l'aide de la description qui va suivre, donnée uniquement à titre d'exemple et faite en se référant au dessin annexé qui représente un mode de réalisation d'un arbre de direction selon l'invention.

Ainsi qu'on peut le voir sur cette figure, l'arbre de direction télescopique selon l'invention est désigné par la référence générale 1.

Cet arbre de direction est par exemple utilisable dans un véhicule automobile en tant qu'arbre supérieur ou inférieur d'un ensemble de colonne de direction.

On rappellera qu'un arbre supérieur est l'arbre portant le volant, tandis qu'un arbre inférieur est l'arbre reliant l'arbre supérieur au reste du mécanisme de direction du véhicule automobile.

Cet arbre de direction télescopique comporte deux portions d'arbre tubulaires et cylindriques désignées par les références 2 et 3 sur cette figure.

Ces portions d'arbre sont montées déplaçables à coulissement l'une dans l'autre et la portion d'arbre interne 3 comporte des cannelures axiales externes désignées par la référence 4, adaptées pour coopérer avec des cannelures internes complémentaires 5 de l'autre portion d'arbre pour assurer une liaison en rotation de ces deux portions d'arbre, tout en autorisant un déplacement à coulissement de celles-ci l'une dans l'autre.

Cet arbre de direction comporte également des moyens d'absorption d'énergie de choc par contrôle du déplacement axial des portions d'arbre l'une dans l'autre et ces moyens d'absorption d'énergie sont formés par au moins une zone de section déformée d'au moins l'une des portions d'arbre, provoquant une ovalisation localisée de celle-ci, permettant un montage sous contrainte de l'une des portions d'arbre dans l'autre pour freiner le déplacement axial des portions d'arbre l'une par rapport à l'autre.

Dans le mode de réalisation représenté sur cette figure, ces moyens d'absorption d'énergie de choc sont formés sur la portion d'arbre externe 2 qui comporte deux zones de section déformée désignées par les références 6 et 7 sur cette figure.

Ces zones de section déformée 6 et 7 sont diamétralement opposées, mais bien entendu un autre nombre de zones de section déformée peut être utilisé comme par exemple trois, décalées de 120° les unes par rapport aux autres.

Bien entendu également, ces zones de section déformée peuvent être ménagées sur la portion d'arbre interne 3 ou sur les deux portions d'arbre.

Il va de soi également que plusieurs zones de section déformée peuvent être réparties le long d'une ou de chaque portion d'arbre pour améliorer encore l'absorption d'énergie.

Ces zones de section déformées peuvent être obtenues par exemple par un outil de frappe à froid de manière classique.

On conçoit que l'arbre de direction télescopique selon l'invention présente un certain nombre d'avantages par rapport aux arbres connus dans l'état de la technique dans la mesure où il ne nécessite pas l'utilisation de pièces supplémentaires comme les organes frangibles et les manchons en matière plastique utilisés dans l'état de la technique.

Par ailleurs, le contrôle de qualité d'un tel arbre est extrêmement facile à réaliser dans la mesure où l'effort nécessaire pour faire coulisser l'une des pièces dans l'autre, c'est à dire le degré d'absorption d'énergie de l'arbre, peut être déterminé lors de l'emmanchement de la portion d'arbre interne dans la portion d'arbre externe dans la mesure où la résistance à l'enfoncement de ces portions d'arbre l'une dans l'autre est déterminée par le degré de mise sous contrainte de ces portions d'arbre l'une dans l'autre.

## Revendications

1. Arbre de direction télescopique notamment pour véhicule automobile, du type comportant deux portions d'arbre (2,3) tubulaires et cylindriques et déplaçables à coulissement l'une dans l'autre, dont l'une (3) comporte des cannelures axiales externes (4) adaptées pour coopérer avec des cannelures internes complémentaires (5) de l'autre portion d'arbre et des moyens d'absorption d'énergie de choc par contrôle du déplacement axial des portions d'arbre l'une par rapport à l'autre, caractérisé en ce que les moyens d'absorption d'énergie sont formés par au moins une zone (6,7) de section déformée d'au moins l'une des portions d'arbre (2,3), provoquant une ovalisation localisée de celle-ci, permettant un montage sous contrainte de l'une des portions d'arbre dans l'autre.

2. Arbre de direction selon la revendication 1, caractérisé en ce que les moyens d'absorption d'énergie de choc comportent plusieurs zones de section déformée réparties sur la ou chaque portion d'arbre.
